Europäisches Patentamt

European Patent Office

Office européen des brevets

(19)

(11) Veröffentlichungsnummer: **0 254 218 B1**

# EUROPÄISCHE PATENTSCHRIFT

(45) Veröffentlichungstag der Patentschrift: **12.06.91**

(51) Int. Cl.5: **A01C 7/10, G05D 7/06**

(21) Anmeldenummer: **87110327.1**

(22) Anmeldetag: **17.07.87**

(54) **Landwirtschaftliche Verteilmaschine.**

(30) Priorität: **25.07.86 DE 3625121**

(43) Veröffentlichungstag der Anmeldung:
**27.01.88 Patentblatt 88/04**

(45) Bekanntmachung des Hinweises auf die
Patenterteilung:
**12.06.91 Patentblatt 91/24**

(84) Benannte Vertragsstaaten:
**AT DE FR GB NL SE**

(56) Entgegenhaltungen:
**DE-A- 3 446 471**
**US-A- 3 912 121**
**US-A- 4 122 974**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Mix, Arthur
Gerhard-Hauptmannweg 15
W-2872 Hude i.O.(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft ein Verfahren zum Regeln der Ausbringmenge einer landwirtschaftlichen Verteilmaschine gemäß des Oberbegriffes des Patentanspruches 1.

Aus der deutschen Offenlegungsschrift 34 14 177 ist es bekannt, die Ausbringmenge über einen Körnerzählsensor zu erfassen und durch einen Mikroprozessor, dem die von dem Sensor erfaßten Signale zugeleitet werden und der aus den erfaßten Signalen die Körneranzahl errechnet, den Antrieb der Dosierorgane entsprechend zu steuern.

Der Erfindung liegt die Aufgabe zugrunde, bei einer gewünschten sprunghaften Sollwertänderung tatsächlich die gewünschte sprunghafte Ausbringmengenänderung bei einer landwirtschaftlichen Verteilmaschine gemäß dem Gattungsbegriff sofort zu erreichen.

Diese Aufgabe wird erfindungsgemäß durch das Kennzeichen des Anspruches 1 gelöst. Infolge dieser Maßnahme wird augenblicklich die Einstellung der Dosierorgane auf den neuen Ausbringmengenwert ohne direkte Berücksichtigung der Werte, die von dem Sensor ermittelt werden, geändert.

Aufgrund dieser erfindungsgemäßen Maßnahmen wird dem Regelkreis vorgetäuscht, daß er diese neue Position schon ständig inne hatte bzw. diese neuen Werte immer schon benutzt und ermittelt.

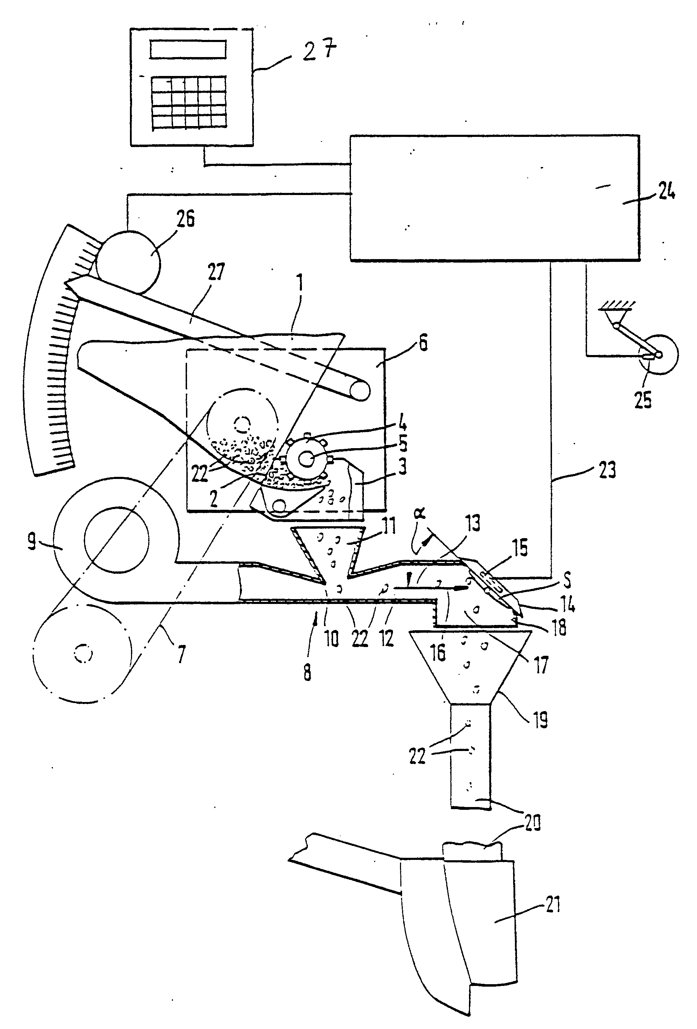

Die Erfindung wird anhand eines Ausführungsbeispieles näher erläutert. Die Zeichnung zeigt die erfindungsgemäße Schaltungsanordnung bei einer Drillmaschine in Prinzipdarstellung.

Der Vorratsbehälter 1 der als Drillmaschine ausgebildeten Verteilmaschine weist in seinem unteren Bereich die Auslauföffnungen 2 auf, vor denen die Dosiergehäuse 3 mit den darin sich befindlichen Dosierorganen 4, die als Nockenräder ausgebildet sind, befinden. Die Nockenräder 4 sind auf der Dosierwelle 5 drehfest angeordnet und werden über das stufenlos einstellbare Regelgetriebe 6 und den Kettentrieb 7 von einer Kraftquelle angetrieben. Unterhalb des Dosiergehäuses 3 ist die Beschleunigungsvorrichtung 8 angeordnet. Die Beschleunigungsvorrichtung 8 besteht aus dem von einer Kraftquelle angetriebenen Gebläse 9, der Injektorschleuse 10 mit dem Einlauftrichter 11 und der als Rohr 12 ausgebildeten Beschleunigungsstrecke 13. An dem Ende der Beschleunigungsstrecke 13 ist die Sensorplatte 14 mit dem Sensor 15 unter dem Winkel

$$\alpha$$

zur Beschleunigungsrichtung 16 der Beschleunigungsstrecke 13 angebracht. Der Winkel

$$\alpha$$

weist etwa eine Größe von 45° auf. Unterhalb der Sensorplatte 14 befindet sich die Öffnung 17 mit dem Auslauf 18, an den sich der Trichter 19 des Saatrohres 20, welches zu dem Säschar 21 führt, anschließt. Da alle Dosierorgane 4 gleich ausgebildet sind und von der gleichen Dosierwelle 5 angetrieben werden, ist es ausreichend, wenn nur unterhalb eines Dosierorganes 4 die Beschleunigungsvorrichtung 8 mit dem Sensor 15 angeordnet ist. Seitlich der Sensorplatte 14 befindet sich der Luftauslaßschlitz S, damit die von dem Gebläse 9 geförderte Luft entweichen kann.

Die sich in dem Vorratsbehälter 1 befindlichen Saatkörner 22 werden in einstellbaren Mengen bzw. Anzahl pro zurückgelegter Wegstrecke der Sämaschine von den jeweiligen Dosierorganen 4 den Säscharen 21 zugeführt und somit in dem Boden abgelegt. Das Dosierorgan 4, unter welchem die Beschleunigungsvorrichtung 8 angeordnet ist, führt die dosierten Saatkörner 22 über den Einlauftrichter 11 der Injektorschleuse 10 zu. In der Injektorschleuse 10 werden die Saatkörner 22 von dem von dem Gebläse 9 erzeugten Luftstrom erfaßt und in Richtung des Sensors 15 in dem Bereich der Beschleunigungsstrecke 13 relativ stark beschleunigt. Die beschleunigten Saatkörner 22 treffen dann mit einer relativ großen Bewegungsenergie auf die Sensorplatte 14 auf. Durch das Auftreffen der Saatkörner 22 auf die Sensorplatte 14 werden Impulse, Signale oder Schwingungen erzeugt, die von dem Sensor 15 aufgenommen werden. Nach dem Auftreffen der Saatkörner 22 auf die Sensorplatte 14 werden die Saatkörner 22 aufgrund des Anstellwinkels

$$\alpha$$

der Sensorplatte 14 zu der Beschleunigungsrichtung 16 der Saatkörner 22 nach unten in Richtung des Trichters 19 des Saatrohres 20 abgelenkt. Von hieraus fallen dann die Saatkörner 22 im freien Fall über das Säschar 21 in die vom Säschar erzeugte Furche.

Die von dem Sensor 15 aufgefangenen Impulse, Signale oder Schwingungen werden über die Leitung 23 einem Mikroprozessor 24 zugeleitet. Weiterhin ist an dem Mikroprozessor 24 die Wegstreckenmeßeinrichtung 25 angeschlossen. Die Wegstreckenmeßeinrichtung ermittelt den von der Sämaschine zurückgelegten Weg. Diese ermittelten Wegstreckenwerte werden ebenfalls dem Mikroprozessor zugeleitet. Aus diesen Werten errechnet der Mikroprozessor 24 dann die tatsächlich ausgebrachte Anzahl von Saatkörnern, die das Dosierorgan 4 dem Säschar 21 zuleitet. Diese ermittelte Anzahl tatsächlich ausgebrachter Saatkörner wird dann in den Mikroprozessor 24 mit den in dem Mikroprozessor 24 eingegebenen Sollwert verglichen. Wenn der ermittelte Istwert von dem Sollwert abweicht, gibt der Mikroprozessor entsprechende Signale an den Stellmotor 26, der dann entsprechend den Stellhebel 27 des Regelgetriebes 6 verstellt, damit das Dosierorgan 4 die dem Sollwert entsprechende Anzahl Saatkörner pro zurückgelegter Wegstrecke dosiert. Dieser Regelvorgang wird kontinuierlich wiederholt. Der Sollwert wird über das ein Bedienungsfeld und ein Anzeigefeld aufweisende Bedienungselement 27 in den Mikroprozessor 24 eingegeben.

Soll nun die Sollwertvorgabe, d.h. die Anzahl ausgebrachter Körner sprunghaft geändert werden, so wird über die Tastatur des Bedienungselementes 27 dieser neue Sollwert in den Mikroprozessor 24 eingegeben. Bei dieser sprunghaften Sollwertänderung errechnet der als Mikroprozessor ausgebildete Computer 24 die prozentuale Sollwertänderung, d.h. die prozentuale Änderung zwischen dem neuen und dem alten Sollwert. Entsprechend dieser prozentualen Sollwertänderung wird über den Stellmotor 26 das Regelgetriebe 6 verstellt, so daß die Dosierorgane entsprechend der neuen Sollwertvorgabe sofort die gewünschte Anzahl Körner bzw. Menge Material ausbringen. Gleichzeitig werden die von dem Auswertecomputer des Mikroprozessors 24 ermittelten Werte, die von dem Sensor 15 an den Mikroprozessor 24 übermittelt worden sind und aus denen der Mikroprozessor 24 die entsprechenden Werte ermittelt hat, entsprechend der Sollwertänderung prozentual verändert, und dann dient dieser prozentual geänderte Wert als Grundlage für die weitere Regelung. Der Auswertecomputer 24 ermittelt aus den von dem Sensor 15 übermittelten Werte ständig einen Mittelwert. Die Einstellung der Dosierorgane 4 wird aufgrund der dem Auswertecomputer von dem Sensor 15 übermittelten Werten und dem hieraus von dem Auswertecomputer 24 gebildeten Mittelwert geregelt. Bei der sprunghaften Sollwertänderung werden diese Mittelwerte entsprechend der prozentualen Sollwertänderung verändert. Somit wird dem Regelkreis vorgetäuscht, daß er diese neuen Werte schon ständig inne hatte. Bei der neuen Sollwertvorgabenänderung wird also festgestellt, um welchen Faktor sich der Sollwert ändert. Die Einstellung des Regelgetriebes wird dann entsprechend diesem Faktor bzw. prozentual verändert.

Im folgenden wird diese Regelung an einem einfachen Beispiel erläutert:
Über das Bedienungselement 27 ist eine Sollwertvorgabe von beispielsweise 100 Körner pro m² bzw. Wegstrecke in den Mikroprozessor 24 eingegeben. Wird nun über das Bedienungselement 27 als neuer Sollwert beispielsweise 150 Körner pro m² bzw. Wegstrecke eingegeben, so wird diese Vorgabe adaptiv und damit sprunghaft geändert. Die prozentuale Änderung beträgt bei diesem Beispiel 50%. Um diese prozentualen Änderungswert von 50% wird über den Stellmotor 26 das Regelgetriebe 6 entsprechend den Kenndaten des Regelgetriebes verstellt. Des weiteren werden die von dem Mikroprozessor 24 aufgrund der von dem Sensor 15 gebildeten Mittelwerte ebenfalls um diesen Faktor 50% verändert. Nach dem sprunghaften Verstellen und Verändern der Werte regelt das System mit dem neuen Vorgabewert weiter.

**Ansprüche**

1. Verfahren zum Regeln der Ausbringmenge einer landwirtschaftlichen Verteilmaschine, wie z. B. einer Sämaschine oder einem Düngerstreuer, wobei

   die zurückgelegte Wegstrecke der Verteilmaschine gemessen und als Wegstreckensignal einem Auswertecomputer (24) zugeleitet wird,

   wobei außerdem die Ausbringmenge des Saatgutes oder Düngers gemessen, die entsprechenden Signale dem Auswertecomputer (24) zugeleitet und hieraus von dem Auswertecomputer (24) Mittelwerte gebildet werden, die ein Ausbringmengensignal darstellen, und

   wobei dann aus dem Wegstreckensignal und dem Ausbringmengensignal ein Istwert der tatsächlichen Ausbringmenge pro zurückgelegter Wegstrecke für die Regelung gebildet wird, der mit einer Sollwertvorgabe verglichen wird und wobei bei Regelabweichung die Drehzahl der Dosierorgane (4) der Verteilmaschine zum Ausgleich der Regelabweichung verändert wird,
   dadurch **gekennzeichnet**,
   daß bei einer gewünschten sprunghaften Änderung der Sollwertvorgabe die prozentuale Änderung zwischen der alten und neuen Sollwertvorgabe ermittelt wird,

   daß dann die Einstellung der Drehzahlen der Dosierorgane (4) entsprechend der ermittelten prozentualen Änderung geändert wird,

   daß entsprechend der ermittelten prozentualen Änderung auch der Mittelwert des Ausbringmengensignals geändert wird und

   daß danach die Regelung auf der Basis der neuen Sollwertvorgabe und des neuen Mittelwertes des Ausbringmengensignals fortgesetzt wird.

## Claims

1. A method of adjusting the distribution rate of an agricultural distributor such for example as a seed drill or a fertiliser distributor, in which

the distance covered by the distributor is measured and passed as a distance signal to an evaluation computer (24),

the distribution rate of seed material or of fertiliser also being measured, the corresponding signals are transmitted to the evaluation computer (24), and therefrom mean values are formed by the evaluation computer (24), said mean values representing a distribution rate signal, and

from the distance signal and the distribution rate signal an actual rate for the actual distribution rate per unit of distance covered is formed for the adjustment system, which is compared with a required value, whereby in the case of deviation between these values the rotary speed of the metering units (4) of the distributor is altered in order to compensate for the adjustment deviation,

characterised in that

during a required discontinuous alteration in the required rate the percentage alteration between the old and the new required rates is ascertained,

that then the rotary speed setting of the metering units (4) is altered in accordance with the ascertained percentage alteration,

that, in accordance with the percentage alteration, the mean value of the distribution rate signal is altered, and

that thereafter the adjustment is continued on the basis of the new required rate and of the new mean value of the distribution rate.

## Revendications

1. Procédé de régulation du débit d'un distributeur agricole comme par exemple un semoir ou un épandeur d'engrais, procédé selon lequel on mesure le chemin parcouru par le distributeur et on transmet ce signal de chemin parcouru à un ordinateur d'exploitation (24), et en outre on mesure la quantité distribuée de semence ou d'engrais et on transmet les signaux correspondants à l'ordinateur (24) et celui-ci forme des valeurs moyennes qui correspondent à un signal de distribution, puis à partir du signal du chemin parcouru et du signal de quantité à distribuer, on forme une valeur réelle pour la quantité réelle à distribuer par chemin parcouru, pour la régulation, et on compare cette valeur à une valeur de consigne et en cas de différence de réglage, on modifie la vitesse de rotation des organes de dosage (4) du distributeur pour compenser cette différence de réglage, procédé caractérisé en ce que pour une variation brutale souhaitée de la valeur de consigne prédéterminée, on détermine le pourcentage de variation entre l'ancienne et la nouvelle valeur de consigne prédéterminée, puis on modifie le réglage des vitesses de rotation des organes de dosage (4) en fonction de ce pourcentage de variation, et en ce que suivant le pourcentage de variation, on modifie également la valeur moyenne du signal de la quantité à distribuer et on poursuit la régulation sur la base de la nouvelle valeur de consigne prédéterminée et de la nouvelle valeur moyenne du signal de la quantité à distribuer.